# EUROPÄISCHE PATENTSCHRIFT

(11) **EP 4 532 196 B1**
(45) Veröffentlichungstag und Bekanntmachung des Hinweises auf die Patenterteilung: **28.01.2026**
(21) Anmeldenummer: 23726525.1
(22) Anmeldetag: 17.05.2023
(51) Int. Cl.: B32B 17/10, B60J 1/02, H05B 3/86

(54) **BEHEIZBARE VERBUNDSCHEIBE MIT AKUSTISCH DÄMPFENDEN EIGENSCHAFTEN**
HEATABLE COMPOSITE PANE WITH ACOUSTICALLY DAMPING PROPERTIES
VITRE COMPOSITE CHAUFFANTE AYANT DES PROPRIÉTÉS D'ISOLATION ACOUSTIQUE

(30) Priorität: 24.05.2022 EP 22175079
(43) Veröffentlichungstag der Anmeldung: 09.04.2025
(73) Patentinhaber: Saint-Gobain Sekurit France, 60150 Thourotte (FR)
(72) Erfinder: GIER, Stephan, 52134 Herzogenrath (DE); WILLMS, Andrea, 52134 Herzogenrath (DE)
(74) Vertreter: SGR Germany-Patents
(86) Internationale Anmeldenummer: PCT/EP2023/063266
(87) Internationale Veröffentlichungsnummer: WO 2023/227444

(56) Entgegenhaltungen:
- WO-A1-2013/035778
- CN-A- 111 775 669
- CN-A- 111 818 679

## Beschreibung

Die Erfindung betrifft eine beheizbare Verbundscheibe mit akustisch dämpfenden Eigenschaften, ein Verfahren zu deren Herstellung und deren Verwendung.

Verbundglasscheiben werden heutzutage an vielen Orten, insbesondere im Fahrzeugbau, verwendet. Dabei umfasst der Begriff Fahrzeug unter anderem Straßenfahrzeuge, Flugzeuge, Schiffe, landwirtschaftliche Maschinen oder auch Arbeitsgeräte.

Auch in anderen Bereichen werden Verbundglasscheiben verwendet. Hierzu zählen beispielsweise Gebäudeverglasungen oder Informationsdisplays, z.B. in Museen oder als Werbedisplays.

Dabei weist eine Verbundglasscheibe im Allgemeinen zwei Scheiben auf, die auf eine Zwischenschicht laminiert sind. Die Scheiben selbst können eine Krümmung aufweisen und sind in aller Regel von konstanter Dicke. Die Zwischenschicht weist in aller Regel ein thermoplastisches Material, vorzugsweise Polyvinylbutyral (PVB), einer vorbestimmten Dicke, z.B. 0,76 mm, auf.

Insbesondere bei Fahrzeugen, aber auch bei Gebäuden, trägt eine gute Schalldämmung wesentlich zur Qualität des Objektes bei. Es wird in der Regel der für Menschen hörbare Schall der äußeren Umgebung gedämpft. Auf diese Weise werden beispielsweise Abrollgeräusche des eigenen Fahrzeugs als auch die anderer Fahrzeuge im Fahrzeuginnenraum nur reduziert wahrgenommen. Diese akustische Dämpfung wird bei Verbundscheiben in der Regel durch sogenannte akustische Zwischenschichten erzielt. Die akustischen Zwischenschichten weisen eine Funktionsschicht auf, die Schall in einem bestimmten Frequenzbereich absorbiert oder reflektiert.

Die EP 1 800 855 A1 beschreibt keilförmige mehrlagige Zwischenschichten umfassend eine zwischen zwei Schutzschichten angeordnete akustisch dämpfende Schicht, wobei die Keilform durch Recken der mehrlagigen Zwischenschichten erhalten werden kann.

Die WO 2018/081570 A1, die US 2016/0341960 A1, die EP 2 017 237 A1 und die WO 2020/007610 A1 offenbaren keilförmige mehrlagige Zwischenschichten, die eine Schicht konstanter Dicke und eine Schicht mit einem keilförmigen Querschnitt umfassen, wobei die Schicht konstanter Dicke eine zwischen zwei Schutzschichten angeordnete akustisch dämpfende Schicht umfasst.

Die WO 2021/127206 A1 offenbart eine mehrlagige akustische Zwischenschicht, wobei die beiden äußeren Schichten keilförmig ausgebildet sind. Die erste äußere Schicht hat zudem eine mindestens 10 % dickere Schichtdicke als die zweite äußere Schicht. Auf diese Weise können die optischen Eigenschaften bei der Verwendung der mehrlagigen akustischen Zwischenschicht in einem Head-Up-Display verbessert werden, ohne dass die geräuschdämmende Wirkung reduziert wird.

Eine weitere große Herausforderung beim Fahren spielt die Beheizung der Windschutzscheibe, um damit Vereisungen oder Beschlagen der Scheibe, welche eine Sichtbehinderung darstellen, verhindern zu können. Die Beheizung der Scheibe findet standardgemäß über erwärmte Luft statt, welche über Zuläufe auf die Scheibe geblasen wird. Zusammengefasst wird diese Art der Beheizung unter der *Heating, Ventilation and Air Conditioning* (HVAC) -Methode. Neben dem enormen Energieverbrauch erfordern die Zuläufe, über die die heiße Luft transportiert und auf die Scheibe geblasen wird, einen hohen Platzbedarf. Weiterhin müssen die Auslassdüsen in bestimmter geometrischer Relation zur Scheibe angebracht werden, was wiederum die Auslegungs- und Konstruktionsfreiheit erheblich einschränkt.

Alternativ kann die Scheibe selbst eine elektrische Heizfunktion aufweisen. Aus DE 10352464 A1 ist beispielsweise eine Verbundglasscheibe bekannt, bei der zwischen zwei Glasscheiben elektrisch beheizbare Drähte als Heizelement eingelegt sind. Die spezifische Heizleistung kann dabei durch den ohmschen Widerstand der Drähte eingestellt werden. Aufgrund von Design- und Sicherheitsaspekten muss die Anzahl sowie der Durchmesser der Drähte möglichst klein gehalten werden. Die Drähte dürfen bei Tageslicht und nachts bei Scheinwerferlicht visuell nicht oder kaum wahrnehmbar sein.

Die WO 2013/035778 A1 offenbart eine Verbundscheibe mit einer Zwischenschicht umfassend eine akustische PVB-Folie und Heizdrähte, wobei die Heizdrähte auf einer Glasoberfläche der Verbundscheibe und zwischen der Zwischenschicht und der Glasscheibe angeordnet sind. Ähnliche Verbundscheiben werden zudem in der CN 111 775 669 A und in der CN 111 818 679 A offenbart.

Heizelemente werden in der Regel zwischen der Außenscheibe und der Innenscheibe innerhalb der thermoplastischen Zwischenschicht eingebettet. Die Heizelemente können jedoch optisch auffallen, insbesondere wenn Sie mit weiteren funktionellen Schichten, die ebenfalls zwischen der Außenscheibe und der Innenscheibe angeordnet sind, in Kontakt kommen. Die auf diese Weise auftretenden optischen Verzerrungen schmälern die optische Qualität der Verbundscheibe. Die Ursache für die optischen Verzerrungen liegt meist an unterschiedlichen Brechungsindizes für sichtbares Licht bei Heizelementen und funktionellen Schichten.

Die Aufgabe der vorliegenden Erfindung besteht daher darin, eine verbesserte beheizbare Verbundscheibe bereitzustellen, welche eine hohe optische Qualität aufweist und weitestgehend frei von optischen Verzerrungen ist.

Die Aufgabe der vorliegenden Erfindung wird erfindungsgemäß durch eine Verbundscheibe nach Anspruch 1 gelöst. Vorteilhafte Ausgestaltungen der Erfindung ergeben sich aus den Unteransprüchen.

Die erfindungsgemäße Verbundscheibe umfasst eine Außenscheibe, eine Innenscheibe, eine akustische Zwischenschicht und ein Heizelement. Die akustische Zwischenschicht ist zwischen der Innenscheibe und der Außenscheibe angeordnet. Die akustische Zwischenschicht umfasst in dieser Reihenfolge eine dickere Schicht, eine Funktionsschicht und eine dünnere Schicht. Das Heizelement ist innerhalb der dickeren Schicht angeordnet. Die Schichtdicke der dickeren Schicht ist mindestens 10% größer als die Schichtdicke der dünneren Schicht. Die Schichtdicke der dickeren Schicht beträgt also mindestens 110% der Schichtdicke der dünneren Schicht. Vorzugsweise ist die dickere Schicht näher zur Innenscheibe angeordnet als zur Außenscheibe. Die dickere Schicht kann aber auch näher zur Außenscheibe angeordnet sein als zur Innenscheibe. Die akustische Zwischenschicht weist vorzugsweise eine für Verbundscheiben übliche Schichtdicke für thermoplastische Zwischenschichten auf. Übliche Schichtdicken für thermoplastische Zwischenschichten sind dem Fachmann allgemein bekannt. Es versteht sich, dass mit dem "innerhalb der dickeren Schicht angeordneten Heizelement" gemeint ist, dass das Heizelement vollständig von der dickeren Schicht umschlossen ist. Das Heizelement hat also keinen Kontakt zur Funktionsschicht oder der Innenscheibe oder der Außenscheibe.

Aufgrund der größeren Schichtdicke der dickeren Schicht im Vergleich zur Schichtdicke der dünneren Schicht, ist das Heizelement besser innerhalb der dickeren Schicht eingebettet. Auf diese Weise wird ein Kontakt des Heizelementes mit der zwischen der dickeren Schicht und der dünneren Schicht angeordneten Funktionsschicht weitestgehend vermieden. Optische Verzerrungen, die durch den Kontakt des Heizelementes mit der Funktionsschicht auftreten, werden reduziert und die optische Qualität der Verbundscheibe im Vergleich zu gattungsgemäßen Verbundscheiben mit symmetrischer akustischer Zwischenschicht erhöht. Mit "symmetrischer akustischer Zwischenschicht" ist gemeint, dass die Schichtdicken der dickeren Schicht und der dünneren Schicht gleich groß sind oder nur um weniger als 10 % voneinander abweichen.

Ein weiterer Vorteil der Erfindung ist, dass es während der Lamination auch zu weniger Beschädigungen der Verbundscheibe kommt, da das Heizelement keine Berührungspunkte mit der Innenscheibe oder der Außenscheibe aufweist. Durch die Berührung des Heizelementes mit den Scheiben entsteht eine zusätzliche Spannung, während der Lamination, die im schlimmsten Fall zu einem Bruch der Verbundscheibe führen kann. Ebenso ist die Entgasung der Zwischenschicht, also die Vermeidung von Gaseinschlüssen in der Zwischenschicht, verbessert, wenn das Heizelement vollständig innerhalb der dickeren Schicht angeordnet ist.

Die Innenscheibe weist eine der akustischen Zwischenschicht zugewandte außenseitige Oberfläche und eine von der akustischen Zwischenschicht abgewandte innenraumseitige Oberfläche auf. Die innenraumseitige Oberfläche der Innenscheibe ist zugleich die Innenfläche der Verbundscheibe. Die Außenscheibe weist eine von der akustischen Zwischenschicht abgewandte außenseitige Oberfläche auf, welche auch gleichzeitig die Außenfläche der Verbundscheibe ist. Die Außenscheibe weist außerdem eine der akustischen Zwischenschicht zugewandte innenraumseitige Oberfläche auf. Die Verbundscheibe ist dafür vorgesehen, eine äußere Umgebung von einem Innenraum, vorzugsweise einen Fahrzeuginnenraum, abzutrennen. Die außenseitige Oberfläche der Außenscheibe ist dabei dafür vorgesehen, der äußeren Umgebung zugewandt zu sein und die innenraumseitige Oberfläche der Innenscheibe ist dafür vorgesehen, dem Innenraum zugewandt zu sein.

In einer bevorzugten Ausführungsform der Erfindung beträgt die Schichtdicke der akustischen Zwischenschicht von 0,2 mm bis 2 mm, bevorzugt 0,4 mm bis 1 mm, besonders bevorzugt 0,5 mm bis 0,85 mm. Mit der Schichtdicke der akustischen Zwischenschicht ist die summierte Schichtdicke der dickeren Schicht, der dünneren Schicht und der Funktionsschicht sowie etwaiger optionaler zusätzlicher Schichten gemeint. Im beschriebenen Schichtdickenbereich der akustischen Zwischenschicht ist der Effekt der Erfindung besonders stark ausgebildet.

In einer weiteren bevorzugten Ausführungsform der Erfindung beträgt die Schichtdicke der dickeren Schicht von 0,1 mm bis 1 mm, bevorzugt 0,15 mm bis 0,5 mm, besonders bevorzugt 0,2 mm bis 0,4 mm. In dem beschriebenen Schichtdickenbereich ist eine besonders gute Einbettung des Heizelementes in die dickere Schicht möglich.

In einer weiteren bevorzugten Ausführungsform der Erfindung beträgt die Schichtdicke der Funktionsschicht von 0,01 mm bis 0,5 mm, bevorzugt 0,05 mm bis 0,2 mm, besonders bevorzugt 0,08 mm bis 0,15 mm. Die akustisch dämpfenden Eigenschaften der Funktionsschicht sind in Hinblick auf den Materialverbrauch und den erforderlichen Raumbedarf besonders vorteilhaft in diesem Schichtdickenbereich.

Besonders bevorzugt ist die Schichtdicke der dickeren Schicht mindestens 15 %, insbesondere mindestens 25 %, größer als die Schichtdicke der dünneren Schicht. Die Schichtdicke der dickeren Schicht beträgt also mindestens 115%, bevorzugt mindestens 125%, der Schichtdicke der dünneren Schicht. In diesem Schichtdickenbereich können optische Verzerrungen durch das Heizelement und die Funktionsschicht noch weiter reduziert werden.

Das Heizelement kann eine elektrisch leitfähige Folie, beispielsweise eine metallische Folie, sein. Vorzugsweise ist das Heizelement als eine elektrisch leitfähige Folie ausgebildet. Die elektrische leitfähige Folie enthält oder besteht aus Metall, vorzugsweise Silber, Gold, Kupfer, Nickel und/oder Chrom oder eine Metalllegierung. Das Heizelement enthält besonders bevorzugt mindestens 90 Gew. % des Metalls, insbesondere mindestens 99,9 Gew. % des Metalls. Das Metall kann auch als Beschichtung auf die elektrisch leitfähige Folie aufgebracht sein. In einer vorteilhaften Ausgestaltung ist die metallische Beschichtung eine elektrisch leitfähige Schicht oder ein Schichtaufbau mehrerer Einzelschichten mit einer Gesamtdicke von kleiner oder gleich 2 µm, besonders bevorzugt kleiner oder gleich 1 µm.

Die Gesamtschichtdicke aller elektrisch leitfähigen Schichten beträgt bevorzugt von 40 nm bis 80 nm, besonders bevorzugt von 45 nm bis 60 nm. In diesem Bereich für die Gesamtdicke aller elektrisch leitfähigen Schichten wird bei für Fahrzeugscheiben, insbesondere Windschutzscheiben typischen Abständen h zwischen zwei Sammelleitern und einer Betriebsspannung U im Bereich von 12 V bis 15 V vorteilhaft eine ausreichend hohe spezifische Heizleistung und gleichzeitig eine ausreichend hohe Transmission erreicht. Zudem weist das Heizelement in diesem Bereich für die Gesamtdicke aller elektrisch leitfähigen Schichten besonders gute reflektierende Eigenschaften für den Infrarotbereich auf. Zu geringe Gesamtschichtdicken aller elektrisch leitfähigen Schichten ergeben einen zu hohen Flächenwiderstand und damit eine zu geringe spezifische Heizleistung sowie verringerte reflektierende Eigenschaften für den Infrarotbereich. Zu große Gesamtschichtdicken aller elektrisch leitfähigen Schichten verringern die Transmission durch die Scheibe zu stark, so dass die Erfordernisse an die Transmission von Fahrzeugscheiben nicht erfüllt werden.

In einer bevorzugten Ausführungsform der Erfindung ist Heizelement in der Form von dünnen Metalldrähten ausgebildet, welche sich vorzugsweise über einen Großteil der Fläche der Verbundscheibe erstrecken. Die Drähte können dabei auch überlappen. Der Durchmesser der Metalldrähte beträgt vorzugsweise kleiner 1 mm, besonders bevorzugt kleiner 0,5 mm, ganz besonders bevorzugt kleiner 100 µm, insbesondere in einem Bereich von 10 µm bis 30 µm. Die Metalldrähte enthalten vorzugsweise zumindest ein Metall, bevorzugt Silber, Gold, Kupfer, Nickel und/oder Chrom oder eine Metalllegierung. Ganz besonders bevorzugt enthalten die Heizdrähte Wolfram oder bestehen daraus. Die Heizdrähte enthalten besonders bevorzugt mindestens 90 Gew. % des Metalls, insbesondere mindestens 99,9 Gew. % des Metalls. Der Effekt der optischen Verzerrung wird besonders deutlich bei der Verwendung von Heizdrähten reduziert. Da die Heizdrähte an vielen unterschiedlichen Bereichen der Verbundscheibe örtlich begrenzt mit der Funktionsschicht in Kontakt kommen können. Es kann daher zu einem Lichtschein-Effekt (Englisch: Halo) kommen, der die optische Qualität der Verbundscheibe herabsetzt. Durch die erfindungsgemäße Lösung wird dieses Problem weitestgehend vermieden.

Die Funktionsschicht weist eine größere Plastizität oder Elastizität auf als die sie umgebende dickere und dünnere Schicht. Die Funktionsschicht besitzt somit einen weichen Kern, wobei die Steifigkeit des Schichtaufbaus vom Kern der Funktionsschicht zu den äußeren Oberflächen der dickeren Schicht und der dünneren Schicht hin zunimmt. Die Funktionsschicht mit höherer Elastizität ist dabei vor allem für die akustische Dämpfung verantwortlich, während die dickere Schicht und die dünnere Schicht mit niedrigerer Elastizität maßgeblich zur Stabilisierung der Funktionsschicht beitragen. Die dickere und die dünnere Schicht dienen auch als thermoplastisches Bindematerial, um die Außenscheibe mit der Innenscheibe fest miteinander zu verbinden.

In einer bevorzugten Ausführungsform der Erfindung kann die dickere Schicht selbst auch aus mehreren Schichten, vorzugsweise zwei Schichten, ausgebildet sein, sodass diese mehreren Schichten bei der Lamination zu der dickeren Schicht verschmelzen. Dies ist insbesondere bevorzugt, wenn das Heizelement als eine elektrisch leitfähige Folie ausgebildet ist. Die elektrisch leitfähige Folie kann also vor der Lamination zwischen die mindestens zwei Schichten der dickeren Schicht angeordnet werden, sodass die elektrisch leitfähige Schicht erfindungsgemäß nach der Lamination innerhalb der dickeren Schicht angeordnet ist.

Die einzelnen Schichten der akustischen Zwischenschicht, d.h. die dickere Schicht, die Funktionsschicht und die dünnere Schicht enthalten in einer Ausführungsform unabhängig voneinander zumindest thermoplastische Kunststoffe, bevorzugt Polyvinylbutyral (PVB), Ethylenvinylacetat (EVA), Polyvinylacetat, Polyurethan (PU), Acrylate oder Gemische oder Copolymere oder Derivate davon, besonders bevorzugt Polyvinylbutyral (PVB), insbesondere Polyvinylbutyral (PVB) und Weichmacher.

In einer bevorzugten Ausführungsform enthalten die dickere Schicht, die Funktionsschicht und/oder die dünnere Schicht Polyvinylbutyral und Weichmacher. Die Auswahl des Weichmachers und der Acetalisierungsgrad des Polyvinylbutyrals ermöglichen es in einer dem Fachmann bekannten Weise die Elastizität der polymeren Schichten zu beeinflussen. Vorzugsweise enthält die Funktionsschicht einen prozentual größeren Anteil an Weichmachern als die dickere Schicht und/oder die dünnere Schicht.

Die dickere Schicht, die Funktionsschicht und/oder die dünnere Schicht können unabhängig voneinander klar und farblos, aber auch getönt, getrübt oder gefärbt sein. Dabei können die Schichten vollflächig getönt oder gefärbt sein. Alternativ können die Schichten auch einen Farbgradienten oder ein farbiges Muster aufweisen. Für Verbundscheiben, die als Windschutzscheiben vorgesehen sind, ist die Färbung oder Tönung derart ausgebildet, dass Verbundscheibe im Spektralbereich von 380 nm bis 780 nm eine Lichttransmission von größer 70 % aufweist. Für Verbundscheiben, die als Dachscheiben oder rückwärtige Seitenscheiben vorgesehen sind, kann die Färbung oder Tönung auch dunkler ausgebildet sein und die Verbundscheiben somit eine Lichttransmission von 70 % oder weniger im Spektralbereich von 380 nm bis 780 nm aufweisen. Es versteht sich, dass in Ausführungsformen bei einer Windschutzscheibe, die Transmission außerhalb des Sichtbereichs, insbesondere im an die Dachkante angrenzenden Bereich, auch weniger als 70 % betragen kann.

Weichmacher sind chemische Verbindungen, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Bevorzugte Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykole. Besonders bevorzugt werden als Weichmacher 3G7, 3G8 oder 4G7 eingesetzt, wobei die erste Ziffer die Anzahl der Ethlenglykoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C₄H₉CH (CH₂CH₃) CO (OCH₂CH₂)₃O₂CCH (CH₂CH₃) C₄H₉.

Bevorzugt enthält die Funktionsschicht auf Basis von PVB mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 35 Gew.-% eines Weichmachers. Der Weichmacher enthält oder besteht beispielsweise aus Triethylenglykol-bis-(2-ethylhexanoat).

Ist etwas "auf Basis" eines polymerischen Materials ausgebildet, so besteht es mehrheitlich, also zu mindestens 50 %, vorzugsweise zu mindestens 60 % und insbesondere zu mindestens 70%, aus diesem Material. Es kann also noch weitere Materialien wie beispielsweise Stabilisatoren oder Weichmacher enthalten.

Die akustische Zwischenschicht weist vorzugsweise eine konstante Schichtdicke auf. Die dickere Schicht, die dünnere Schicht und die Funktionsschicht weisen vorzugsweise eine konstante Schichtdicke auf. Die dickere Schicht, die Funktionsschicht und/oder die dünnere Schicht können aber auch keilförmig ausgebildet sein. Mit "keilförmig ausgebildet" ist gemeint, dass die Schichten in einer Querschnittansicht die Form eines Keiles aufweisen. Die keilförmigen Schichten weisen also keine konstante Schichtdicke, sondern eine variable Schichtdicke mit einem dickeren ersten Ende und einem dünneren zweiten Ende. Keilförmig ausgebildete Schichten sind insbesondere dann bevorzugt, wenn die Verbundscheibe dazu vorgesehen ist Bestandteil einer Projektionsanordnung (bspw. eines Head-Up-Displays) zu sein. Durch die keilförmige Ausbildung der akustischen Zwischenschicht können Doppelbilder bei der Licht-Reflexion der Verbundscheibe reduziert werden (mit Licht ist sichtbares Licht gemeint).

Bei der dickeren Schicht, der Funktionsschicht und/oder der dünneren Schicht kann es sich um keilförmig extrudierte thermoplastische Schichten oder um keilförmig gereckte thermoplastische Schichten handeln. Eine keilförmig gereckte Schicht kann durch keilförmiges Recken erhalten werden. Der Keilwinkel der dickeren Schicht, Funktionsschicht und der dünneren Schicht beträgt unabhängig voneinander bevorzugt 0,1 mrad bis 1,0 mrad, besonders bevorzugt 0,3 mrad bis 0,7 mrad.

Bei keilförmig ausgebildeten Schichten gilt im Sinne der Erfindung, dass die jeweilige Schichtdicke, aus der sich der erfindungsgemäße Schichtdickenunterschied zwischen der dickeren Schicht und der dünneren Schicht berechnet, bezüglich der dickeren Schicht immer auf den Bereich mit der dünnsten Schichtdicke bezogen ist und bezüglich der dünneren Schicht immer auf den Bereich mit der dicksten Schichtdicke bezogen ist. Mit anderen Worten ist die dickere Schicht keilförmig ausgebildet und die dünnere Schicht ist nicht keilförmig ausgebildet, dann weist das dünnere Ende der dickeren Schicht eine mindestens 10% größere Schichtdicke als die dünnere Schicht auf. Sind hingegen sowohl die dickere Schicht als auch die dünnere Schicht keilförmig ausgebildet, dann weist das dünnere Ende der dickeren Schicht eine mindestens 10% größere Schichtdicke als das dickere Ende der dünneren Schicht auf. Ist nur die dünnere Schichtdicke keilförmig ausgebildet, dann weist die dickere Schicht eine mindestens 10% größere Schichtdicke als das dickere Ende der dünneren Schicht auf.

In einer besonders bevorzugten Ausführungsform erstreckt sich das Heizelement über mindestens 10%, bevorzugt mindestens 30 %, besonders bevorzugt mindestens 80 % und insbesondere mindestens 90 % der Fläche der Verbundscheibe. Durch die Erstreckung des Heizelementes über einen Großteil der Verbundscheibe kann diese effizient erwärmt werden.

Das Heizelement ist bevorzugt mit mindestens zwei zum Anschluss an eine Spannungsquelle vorgesehenen äußeren Sammelleiter elektrisch verbunden. Das Heizelement ist dabei derart mit den Sammelleitern verbunden, dass zwischen den Sammelleitern ein Strompfad für einen Heizstrom geformt ist. Die Sammelleiter sind bevorzugt an zwei sich gegenüberliegenden Randbereichen des Heizelementes angeordnet. Durch die Beheizung der Verbundscheibe über das Heizelement kann die typischerweise bei Fahrzeugscheiben verwendete Beheizungsvariante mittels der Heating, Ventilation and Air Conditioning (HVAC) -Methode überflüssig gemacht werden. Dies verringert den Platzbedarf in einem Fahrzeug. Die Beheizung mittels HVAC erfordert Zuleitungen, welche die üblicherweise im Motorraum erwärmte Luft zur Verbundscheibe leiten. Diese Zuleitungen sind meist im Armaturenbrett eines Fahrzeugs verbaut und haben einen großen Platzbedarf. Die elektrische Beheizung der Verbundscheibe mit dem Heizelement ist jedoch auch mit Hinblick auf die Verwendung in Elektrofahrzeugen vorteilhaft. In Elektrofahrzeugen bedeutet die Erwärmung der Windschutzscheibe über das Heizelement eine Energieeinsparung im Vergleich zur elektrischen Erwärmung von Luft, welche auf die Verbundscheibe geleitet wird. Weiterhin ergeben sich konstruktive Freiheitsgrade, da die Luftauslässe von HVAC-Systemen in einer definierten geometrischen Anordnung zur Glasoberfläche positioniert sein müssen, um die Gebläsefunktion zu ermöglichen.

Ist das Heizelement der erfindungsgemäßen Verbundscheibe als eine elektrisch leitfähige Folie ausgebildet weist sie bevorzugt einen Flächenwiderstand kleiner oder gleich 1 Ohm/Quadrat auf, besonders bevorzugt von 0,4 Ohm/Quadrat bis 0,9 Ohm/Quadrat, ganz besonders bevorzugt von 0,5 Ohm/Quadrat bis 0,85 Ohm/Quadrat, beispielsweise etwa 0,7 Ohm/Quadrat. In diesem Bereich für den Flächenwiderstand werden vorteilhaft hohe spezifische Heizleistungen P erreicht. Außerdem weist das Heizelement, wenn es als eine beschichtete transparente Folie ausgebildet ist, in diesem Bereich für den Flächenwiderstand besonders gute reflektierende Eigenschaften für den Infrarotbereich auf.

In einer besonderen Ausführungsform der Erfindung ist das Heizelement in einem Randbereich der Außenscheibe oder Innenscheibe so mit zwei zum Anschluss an eine Spannungsquelle vorgesehenen Sammelleitern verbunden, dass zwischen den Sammelleitern ein Strompfad für einen Heizstrom geformt ist. Das Heizelement erstreckt sich in diesem Zusammenhang vorzugsweise über 80% oder mehr, besonders bevorzugt über 90% oder mehr, der Fläche der Verbundscheibe. Durch diese Anordnung kann der größte Teil der Verbundscheibe effizient beheizt werden.

Die Sammelleiter können als aufgedruckte und eingebrannte leitfähige Struktur ausgebildet sein. Die aufgedruckten Sammelleiter enthalten bevorzugt zumindest ein Metall, eine Metalllegierung, eine Metallverbindung und/oder Kohlenstoff, besonders bevorzugt ein Edelmetall und insbesondere Silber. Die Druckpaste enthält bevorzugt metallische Partikel Metallpartikel und/oder Kohlenstoff und insbesondere Edelmetallpartikel wie Silberpartikel. Die elektrische Leitfähigkeit wird bevorzugt durch die elektrisch leitenden Partikel erzielt. Die Partikel können sich in einer organischen und/oder anorganischen Matrix wie Pasten oder Tinten befinden, bevorzugt als Druckpaste mit Glasfritten.

Die Schichtdicke der aufgedruckten Sammelleiter beträgt bevorzugt von 5 µm bis 40 µm, besonders bevorzugt von 8 µm bis 20 µm und ganz besonders bevorzugt von 8 µm bis 12 µm. Aufgedruckte Sammelleiter mit diesen Dicken sind technisch einfach zu realisieren und weisen eine vorteilhafte Stromtragfähigkeit auf.

Die Breite der Sammelleiter beträgt bevorzugt von 2 mm bis 30 mm, besonders bevorzugt von 4 mm bis 20 mm und insbesondere von 10 mm bis 20 mm. Dünnere Sammelleiter führen zu einem zu hohen elektrischen Widerstand und damit zu einer zu hohen Erwärmung des Sammelleiters im Betrieb. Des Weiteren sind dünnere Sammelleiter nur schwer durch Drucktechniken wie Siebdruck herzustellen. Dickere Sammelleiter erfordern einen unerwünscht hohen Materialeinsatz.

Der spezifische Widerstand ρa der Sammelleiter beträgt bevorzugt von 0.8 µOhm•cm bis 7.0 µOhm•cm und besonders bevorzugt von 1.0 µOhm•cm bis 2.5 µOhm•cm. Sammelleiter mit spezifischen Widerständen in diesem Bereich sind technisch einfach zu realisieren und weisen eine vorteilhafte Stromtragfähigkeit auf.

Alternativ kann der Sammelleiter aber auch als Streifen einer elektrisch leitfähigen Folie ausgebildet sein. Der Sammelleiter enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lotmasse, über einen elektrisch leitfähigen Kleber oder durch direktes Auflegen elektrisch leitend verbunden sein.

In einer besonders bevorzugten Ausführungsform sind die zwei Sammelleiter mit einer Spannungsquelle verbunden, sodass zwischen den beiden Sammelleitern ein Strompfad durch das Heizelement für einen Heizstrom geformt ist.

Die Innenscheibe und die Außenscheibe sind bevorzugt aus Glas gefertigt, besonders bevorzugt aus Kalk-Natron-Glas, wie es für Fensterscheiben üblich ist. Die Innenscheibe und die Außenscheibe können aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat.

Die Innenscheibe und/oder die Außenscheibe können Antireflexbeschichtungen, Antihaftbeschichtungen, Antikratzbeschichtungen, photokatalytische Beschichtungen, elektrisch heizbare Beschichtungen, Sonnenschutzbeschichtungen und/oder Low-E-Beschichtungen aufweisen.

Die Dicke der Außenscheibe und der Innenscheibe kann breit variieren und so den Erfordernissen im Einzelfall angepasst werden. Die Innenscheibe und die Außenscheibe weisen bevorzugt Dicken von 0,5 mm bis 5 mm auf, besonders bevorzugt von 1 mm bis 3 mm. Beispielsweise ist die Außenscheibe 2,1 mm dick und die Innenscheibe 1,6 mm dick. Es kann sich bei der Außenscheibe oder insbesondere der Innenscheibe aber auch um Dünnglas mit einer Dicke von beispielsweise 0,55 mm handeln.

Bevorzugt weisen die Innenscheibe und die Außenscheibe keinen Keilwinkel auf. Es ist aber auch möglich, dass die Innenscheibe und/oder die Außenscheibe einen keilförmigen Querschnitt aufweisen. Der Keilwinkel der Verbundscheibe setzt sich aus dem Keilwinkel der akustischen Zwischenschicht, der Innenscheibe und der Außenscheibe zusammen.

Die erfindungsgemäße Verbundscheibe kann eine Fahrzeugscheibe sein. Eine Fahrzeugscheibe ist zur Abtrennung eines Fahrzeuginnenraums von einer äußeren Umgebung vorgesehen. Eine Fahrzeugscheibe ist also eine Fensterscheibe, die in eine Fensteröffnung der Fahrzeugkarosserie eingesetzt ist oder dafür vorgesehen ist. Eine erfindungsgemäße Verbundscheibe ist insbesondere eine Windschutzscheibe eines Kraftfahrzeugs.

Die Innenscheibe und die Außenscheibe können unabhängig voneinander klar und farblos, aber auch getönt, getrübt oder gefärbt sein. Die Gesamttransmission durch die Verbundscheibe beträgt in einer bevorzugten Ausgestaltung größer 70%, insbesondere wenn die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Innenscheibe und die Außenscheibe können aus nicht vorgespanntem, teilvorgespanntem oder vorgespanntem Glas bestehen.

Eine erfindungsgemäße Verbundscheibe kann zusätzlich einen Abdeckdruck, insbesondere aus einer dunklen, bevorzugt schwarzen, Emaille umfassen. Bei dem Abdeckdruck handelt es sich insbesondere um einen peripheren, d.h. rahmenartigen, Abdeckdruck. Der periphere Abdeckdruck dient in erster Linie als UV-Schutz für den Montagekleber der Verbundscheibe. Der Abdeckdruck kann opak und vollflächig ausgebildet sein. Der Abdeckdruck kann zumindest abschnittsweise auch semitransparent, beispielsweise als Punktraster, Streifenraster oder kariertes Raster ausgebildet sein. Alternativ kann der Abdeckdruck auch einen Gradienten aufweisen, beispielsweise von einer opaken Bedeckung zu einer semitransparenten Bedeckung. Der Abdeckdruck ist üblicherweise auf der innenraumseitigen Oberfläche der Außenscheibe oder auf der innenraumseitigen Oberfläche der Innenscheibe aufgebracht.

Die erfindungsgemäße Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn sie als Scheibe für Busse, Züge oder Traktoren vorgesehen ist.

Die erfindungsgemäße Verbundscheibe kann beispielsweise als Bestandteil eines Head-Up-Display (HUD) oder einer anderen Projektionsanordnung zur Anzeige von Informationen verwendet werden.

Die Erfindung betrifft auch ein Verfahren zur Herstellung einer Verbundscheibe wobei
(A) ein Schichtstapel mit der Außenscheibe, der akustischen Zwischenschicht, dem Heizelement und der Innenscheibe bereitgestellt wird.
(B) Das Heizelement innerhalb der dickeren Schicht, bevorzugt mittels Eindrückens, angeordnet wird.
(C) Der Schichtstapel zur Verbundscheibe laminiert wird.

In einer bevorzugten Ausführungsform des erfindungsgemäßen Verfahrens umfasst die dickere Schicht der akustischen Zwischenschicht eine erste Schicht und eine zweite Schicht. Das Heizelement wird im zweiten Verfahrensschritt zwischen der ersten Schicht und der zweiten Schicht angeordnet, sodass im Sinne der Erfindung das Heizelement innerhalb der dickeren Schicht angeordnet wird. Im dritten Verfahrensschritt, während der Lamination, verschmelzen die erste Schicht und die zweite Schicht zur dickeren Schicht und die dickere Schicht, die dünnere Schicht sowie die Funktionsschicht verschmelzen zur akustischen Zwischenschicht. Das Heizelement ist somit innerhalb der dickeren Schicht angeordnet und wird vollständig von der dickeren Schicht umgeben. Diese Ausführungsform ist insbesondere dann bevorzugt, wenn das Heizelement als eine elektrisch leitfähige Folie ausgebildet ist.

Mit "Eindrücken" ist im Sinne der Erfindung gemeint, dass das Heizelement mittels angewendeten Druckes, vorzugsweise bei gleichzeitiger Erwärmung der dickeren Schicht, in die dickere Schicht hineingedrückt wird.

Die Lamination des Schichtstapels kann mittels geläufiger Laminationsverfahren erfolgen. Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. Alternativ sind auch autoklavfreie Verfahren möglich. An sich bekannte Vakuumsack- oder Vakuumringverfahren arbeiten beispielsweise bei etwa 200 mbar und 80 °C bis 110 °C. Die Innenscheibe, akustische Zwischenschicht und die Außenscheibe können auch in einem Kalander zwischen mindestens einem Walzenpaar zu einer Verbundscheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Innenscheibe und die Außenscheibe innerhalb von beispielsweise etwa 60 Minuten bei verminderten Drücken von 0,01 mbar bis 800 mbar und Temperaturen von 80 °C bis 170 °C laminiert werden.

Soll die Verbundscheibe gebogen sein, so werden die Innenscheibe und die Außenscheibe bevorzugt vor der Lamination einem Biegeprozess unterzogen. Bevorzugt werden die Innenscheibe und die Außenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

Die erfindungsgemäße Verbundscheibe kann beispielsweise die Dachscheibe, Windschutzscheibe, Seitenscheibe oder Heckscheibe eines Fahrzeugs oder eine andere Fahrzeugverglasung sein, beispielsweise eine Trennscheibe in einem Fahrzeug, bevorzugt in einem Schienenfahrzeug, einem Auto oder einem Bus. Alternativ kann die Verbundscheibe eine Architekturverglasung, beispielsweise in einer Außenfassade eines Gebäudes oder eine Trennscheibe im Innern eines Gebäudes, oder ein Einbauteil in Möbeln oder Geräten sein.

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:
- Figur 1: eine Draufsicht auf eine Ausführungsform einer erfindungsgemäßen Verbundscheibe,
- Figur 2: eine vergrößerte Querschnittansicht der Ausführungsform aus Figur 1,
- Figur 3: eine vergrößerte Querschnittansicht einer gattungsgemäßen Verbundscheibe und
- Figur 4-5: vergrößerte Querschnittansichten von weiteren Ausführungsformen einer erfindungsgemäßen Verbundscheibe.

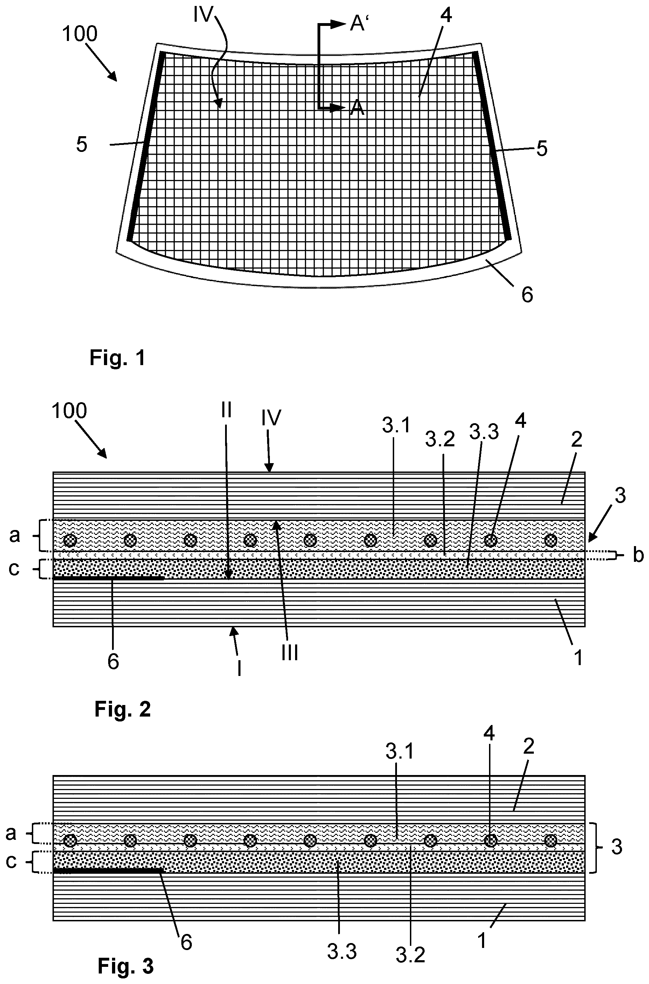

Figur 1 zeigt eine Draufsicht auf eine erfindungsgemäße Verbundscheibe 100, insbesondere zur Verwendung als Windschutzscheibe eines Kraftfahrzeugs. Die Figur 2 zeigt eine vergrößerte Querschnittansicht der Verbundscheibe 100 aus Figur 1 entlang der Schnittlinie A-A' wie sie Figur 1 angedeutet ist.

Die Verbundscheibe 100 weist ein Heizelement 4 auf, welches in Form von Heizdrähten zwischen der Außenscheibe 1 und der Innenscheibe 2 angeordnet ist. Das Heizelement 4 erstreckt sich über die gesamte Fläche der Verbundscheibe 100 mit Ausnahme eines umlaufenden dünnen Randbereiches, von beispielsweise 1 cm Breite, welcher zur elektrischen Isolierung der Verbundscheibe 100 mit der äußeren Umgebung dient. Zwei Sammelleiter 5 sind mit dem Heizelement 4 an zwei gegenüberliegenden Randbereichen des Heizelementes 4 elektrisch leitend verbunden. Ein erster Sammelleiter der zwei Sammelleiter 5 ist parallel zu einer linken Seitenkante der Verbundscheibe 100 angeordnet. Ein zweiter Sammelleiter der zwei Sammelleiter 5 ist parallel zu einer rechten Seitenkante der Verbundscheibe 100 angeordnet. Die Raumangaben "links" und "rechts" beziehen sich hierbei auf die Position der Sammelleiter 5 bei einem Blick auf eine dem Innenraum zugewandten Oberfläche der eingebauten Verbundscheibe 100. Auch eine Anordnung der Sammelleiter 5 parallel zu einer Oberkante und zu einer Unterkante der Verbundscheibe 100 ist möglich (hier nicht gezeigt). Die Sammelleiter 5 sind dazu vorgesehen, mit einer Spannungsquelle verbunden zu sein, sodass ein Heizstrom zwischen den Sammelleitern 5 und durch das Heizelement 4 fließen kann. Die Verbundscheibe 100 kann also nach Bedarf durch das Heizelement 4 erwärmt werden, wodurch Frost und Beschlag (Kondenswasser) entfernt werden können.

Die Verbundscheibe 100 weist zusätzlich einen Abdeckdruck 6, beispielsweise eine dunkle Emaille, auf. Der Abdeckdruck 6 ist in einem umlaufenden Randbereich der Verbundscheibe 100 rahmenartig angeordnet. Der periphere Abdeckdruck 6 dient beispielsweise als UV-Schutz für den Montagekleber der Verbundscheibe 100. Der Abdeckdruck 6 kann auf der Innenscheibe 2 oder der Außenscheibe 1 aufgebracht sein (hier nicht gezeigt).

Figur 2 zeigt eine vergrößerte Querschnittansicht der Verbundscheibe 100 in einem oberen Randbereich wie durch die Schnittlinie A-A' in Figur 1 angedeutet. Die Verbundscheibe 100 umfasst eine Außenscheibe 1 und eine Innenscheibe 2. Zwischen die Außenscheibe 1 und der Innenscheibe 2 ist eine akustische Zwischenschicht 3 angeordnet. Die Außenscheibe 1 weist eine von der akustischen Zwischenschicht 3 abgewandte außenseitige Oberfläche I und eine der akustischen Zwischenschicht 3 zugewandte innenraumseitige Oberfläche II auf. Die Innenscheibe 2 weist eine der akustischen Zwischenschicht 3 zugewandte außenseitige Oberfläche III und eine von der akustischen Zwischenschicht 3 abgewandte innenraumseitige Oberfläche IV auf. Die außenseitige Oberfläche I der Außenscheibe 1 ist auch gleichzeitig die Außenseite der Verbundscheibe 100, welche in Einbaulage dazu vorgesehen ist, einer äußeren Umgebung zugewandt zu sein. Die innenraumseitige Oberfläche IV der Innenscheibe 2 ist auch gleichzeitig die Innenseite der Verbundscheibe 100, welche in Einbaulage dazu vorgesehen ist, einem Innenraum zugewandt zu sein.

Die Außenscheibe 1 und die Innenscheibe 2 bestehen beispielsweise aus transparentem Kalknatronglas. Die Außenscheibe weist beispielsweise eine Dicke von 2,1 mm auf. Die Innenscheibe 2 weist beispielsweise eine Dicke von 1,6 mm auf.

Der Abdeckdruck 6 ist auf der innenraumseitigen Oberfläche II der Außenscheibe 1 aufgebracht. Die akustische Zwischenschicht 3 umfasst in dieser Reihenfolge eine dickere Schicht 3.1, eine Funktionsschicht 3.2 und eine dünnere Schicht 3.3. Die dickere Schicht 3.1 ist auf der außenseitigen Oberfläche III der Innenscheibe 2 angeordnet. Entsprechend ist die dünnere Schicht 3.3 auf der innenraumseitigen Oberfläche II der Außenscheibe 1 angeordnet. Das Heizelement 4 in Form von Heizdrähten ist mittels Druck und Wärme innerhalb der dickeren Schicht 3.1 eingebracht. Die dickere Schicht 3.1 und die dünnere Schicht 3.3 sind beispielsweise aus thermoplastischem Plastik. Vorzugsweise sind die dickere Schicht 3.1 und die dünnere Schicht 3.3 auf Basis von PVB ausgebildet. Die Funktionsschicht 3.2 ist beispielsweise aus thermoplastischem Plastik und enthält vorzugsweise PVB. Die Funktionsschicht 3.2 weist beispielsweise einen höheren Anteil an Weichmachern auf als die dickere und die dünnere Schicht 3.1, 3.3.

Die dickere Schicht 3.1 weist beispielsweise eine Schichtdicke a von 0,353 mm auf. Die dünnere Schicht 3.3 weist beispielsweise eine Schichtdicke c von 0,307 mm auf. Die Schichtdicke b der Funktionsschicht 3.2 beträgt beispielsweise 0,1 mm auf. Die Schichtdicke der gesamten akustischen Zwischenschicht 3 beträgt beispielsweise 0,76 mm. Erfindungsgemäß ist die Schichtdicke a der dickeren Schicht 3.1 größer als die Schichtdicke c der dünneren Schicht 3.3. Die Schichtdicke a der dickeren Schicht 3.1 ist ungefähr 15% größer als die Schichtdicke c der dünneren Schicht 3.3. Die größere Schichtdicke a der dickeren Schicht 3.1 führt dazu, dass das Heizelement 4 besser in die dickere Schicht 3.1 eingebettet werden kann. Das Heizelement 4 hat keinen oder zumindest im Wesentlichen keinen Kontakt zu der Funktionsschicht 3.2. Dies führt zu einer besseren optischen Qualität der Verbundscheibe 100. Das Heizelement 4 ist aufgrund der besseren Einbettung in die dickere Schicht 3.1 weniger optisch auffällig.

Die Figur 3 zeigt eine gattungsgemäße Verbundscheibe 100, welche im Wesentlichen der Variante aus den Figuren 1 und 2 entspricht, sodass hier nur auf die Unterschiede eingegangen wird und ansonsten auf die Beschreibung zu den Figuren 1 und 2 verwiesen wird. Im Unterschied zu der in Figur 2 gezeigten Verbundscheibe 100 weisen die dickere und die dünnere Schicht 3.1, 3.3 die gleich Schichtdicke, beispielsweise 0,33 mm, auf. Das bedeutet es gilt: Schichtdicke a = Schichtdicke c. Die Gesamtschichtdicke der akustischen Zwischenschicht 3 beträgt 0,76 mm. Aufgrund der geringeren Schichtdicke a der dickeren Schicht 3.1 im Vergleich zur Schichtdicke a der erfindungsgemäßen Verbundscheibe 100 werden die Heizdrähte 4 schlechter in die Schicht 3.1 eingebettet. Durch die verschlechterte Einbettung des Heizelementes 4 in die dickere Schicht 3.1 kommt es zu einem Kontakt des Heizelementes 4 mit der Funktionsschicht 3.2. Dies führt zu Unebenheiten der Funktionsschicht 4 und die Unebenheiten werden als optische Verzerrung sichtbar. Für die Heizdrähte des Heizelementes 4 bedeutet dies, dass sie besser sichtbar sind, da am Rand der Heizdrähte eine Art Lichtschein (englisch: Halo) zu sehen ist. Dies beeinträchtigt die optische Qualität der Verbundscheibe 100.

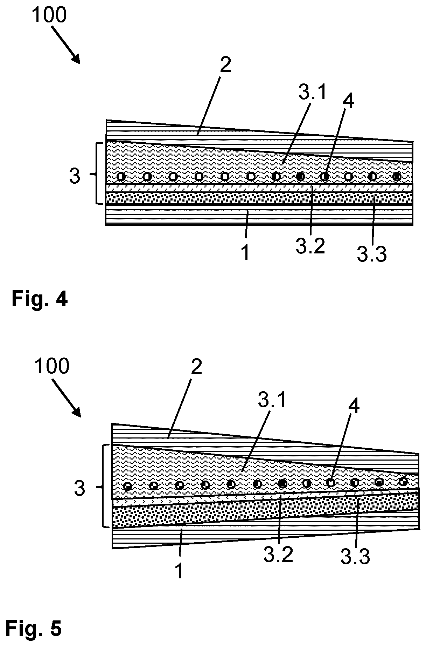

Die in Figur 4 und 5 gezeigten erfindungsgemäßen Varianten entsprechen im Wesentlichen der Variante aus den Figuren 1 und 2, sodass hier nur auf die Unterschiede eingegangen wird und ansonsten auf die Beschreibung zu den Figuren 1 und 2 verwiesen wird.

Anders als in Figur 2 dargestellt weist die dickere Schicht 3.1 in Figur 4 keine gleichmäßige Schichtdicke a auf, sondern ist keilförmig ausgebildet. Erkennbar ist, dass die dickere Schicht 3.1 einen keilförmigen Querschnitt mit einem dickeren ersten Ende und einem dünneren zweiten Ende aufweist. In der in der Figur 4 gezeigten Ausführungsform beträgt die Dicke am dünneren zweiten Ende der dickeren Schicht 3.1 beispielsweise 0,353 mm. Der Keilwinkel der dickeren Schicht 3.1 ist beispielsweise 0,55 mrad. Die dünnere Schicht 3.3 weist beispielsweise eine Schichtdicke c von 0,307 mm auf. Die Dicke a der dickeren Schicht 3.1 ist am dünneren zweiten Ende ungefähr 15 % größer als die Schichtdicke c der dünneren Schicht 3.3. Hierbei wird ein Kontakt des Heizelementes 4 mit der Funktionsschicht 3.2 zumindest weitestgehend verhindert.

In der Figur 5 gezeigten Variante weisen die dickere Schicht 3.1, die Funktionsschicht 3.2 und die dünnere Schicht 3.3 keine gleichmäßigen Schichtdicken a, b, c auf, sondern sind keilförmig ausgebildet. Die dickere Schicht 3.1, die Funktionsschicht 3.2 und die dünnere Schicht 3.3 weisen also in der gezeigten Querschnittansicht jeweils ein erstes dickeres Ende und ein zweites dünneres Ende auf. Das zweite dünnere Ende der dickeren Schicht 3.1 beträgt beispielsweise 0,353 mm und der Keilwinkel der dickeren Schicht 3.1 beträgt beispielsweise 0,4 mrad. Das zweite dünnere Ende der dünneren Schicht 3.3 beträgt beispielsweise 0,307 mm mit und der Keilwinkel der dünneren Schicht 3.3 beträgt beispielsweise 0,1 mrad. Das zweite dünnere Ende der Funktionsschicht 3.2 beträgt beispielsweise 0,09 mm und der Keilwinkel der Funktionsschicht 3.2 beträgt beispielsweise 0,1 mrad. Hierbei wird ein Kontakt des Heizelementes 4 mit der Funktionsschicht 3.2 zumindest weitestgehend verhindert.

### Beispiele

In den erfindungsgemäßen Beispielen und den gattungsgemäßen Vergleichsbeispielen wurden die Schichtdicken der dickeren Schicht 3.1, der Funktionsschicht 3.2 und der dünneren Schicht 3.3 variiert. In jedem Beispiel ist eine Verbundscheibe 100 gezeigt, wobei die erfindungsgemäßen Beispiele dem Aufbau aus Figur 2 nachempfunden sind und die Vergleichsbeispiele dem Aufbau aus Figur 3.

**Tabelle 1.**

| | Schichtdicke in mm | | | | | |
|---|---|---|---|---|---|---|
| Schicht | Beispiel 1 | Beispiel 2 | Beispiel 3 | Vergleichsbeispiel 1 | Vergleichsbeispiels 2 | Vergleichsbeispiel 3 |
| Innenscheibe | 1,6 | 1,6 | 1,6 | 1,6 | 1,6 | 1,6 |
| Dickere Schicht | 0,214 | 0,353 | 0,396 | 0,200 | 0,330 | 0,370 |
| Funktionsschicht | 0,10 | 0,10 | 0,10 | 0,10 | 0,10 | 0,10 |
| Dünnere Schicht | 0,186 | 0,307 | 0,344 | 0,200 | 0,330 | 0,370 |
| Außenscheibe | 2,1 | 2,1 | 2,1 | 2,1 | 2,1 | 2,1 |
| Optische Mängel? | Nein | Nein | Nein | Ja | Ja | Ja |

Mit "optischen Mängeln" sind verstärkte optische Verzerrungen oder Lichtschein-Effekte gemeint, welche durch den Kontakt des Heizelementes 4 mit der Funktionsschicht 3.2 auftreten. Durch die dickere Schichtdicke a der dickeren Schicht 3.1 im Vergleich zur Schichtdicke c der dünneren Schicht 3.3 können nachweislich optische Mängel, die im Zusammenhang mit dem Heizelement 4 und der Funktionsschicht 3.2 auftreten, zumindest weitestgehend vermieden werden.

### Bezugszeichenliste

- 1: Außenscheibe
- 2: Innenscheibe
- 3: akustische Zwischenschicht
- 3.1: dickere Schicht
- 3.2: Funktionsschicht
- 3.3: dünnere Schicht
- 4: Heizelement
- 5: Sammelleiter
- 6: Abdeckdruck

- 100: Verbundscheibe

- I: Außenseitige Oberfläche der Außenscheibe 1
- II: Innenraumseitige Oberfläche der Außenscheibe 1
- III: Außenseitige Oberfläche der Innenscheibe 2
- IV: Innenraumseitige Oberfläche der Innenscheibe 2

- a: Schichtdicke der dickeren Schicht 3.1
- b: Schichtdicke der Funktionsschicht 3.2
- c: Schichtdicke der dünneren Schicht 3.3

- A-A': Schnittlinie

## Patentansprüche

1. Verbundscheibe (100), umfassend:
- eine Außenscheibe (1),
- eine Innenscheibe (2),
- eine zwischen der Innenscheibe (2) und der Außenscheibe (1) angeordnete akustische Zwischenschicht (3) und
- ein Heizelement (4),
wobei die akustische Zwischenschicht (3) in dieser Reihenfolge eine dickere Schicht (3.1), eine Funktionsschicht (3.2) und eine dünnere Schicht (3.3) umfasst und das Heizelement (4) innerhalb der dickeren Schicht (3.1) angeordnet und vollständig von der dickeren Schicht (3.1) umschlossen ist,
wobei die Schichtdicke (a) der dickeren Schicht (3.1) mindestens 10% größer als die Schichtdicke (c) der dünneren Schicht (3.3) ist,
wobei bei keilförmig ausgebildeten Schichten die jeweilige Schichtdicke, aus der sich der Schichtdickenunterschied zwischen der dickeren Schicht (3.1) und der dünneren Schicht (3.3) berechnet, bezüglich der dickeren Schicht (3.1) auf den Bereich mit der dünnsten Schichtdicke bezogen ist und bezüglich der dünneren Schicht (3.3) auf den Bereich mit der dicksten Schichtdicke bezogen ist.

2. Verbundscheibe (100) nach Anspruch 1, wobei die akustische Zwischenschicht (3) eine konstante Schichtdicke aufweist und die Schichtdicke der akustischen Zwischenschicht (3) von 0,2 mm bis 2 mm, bevorzugt 0,4 mm bis 1 mm, besonders bevorzugt 0,5 mm bis 0,85 mm beträgt.

3. Verbundscheibe (100) nach Anspruch 1 oder 2, wobei die dickere Schicht (3.1) eine konstante Schichtdicke aufweist und die Schichtdicke (a) der dickeren Schicht (3.1) von 0,1 mm bis 1 mm, bevorzugt 0,15 mm bis 0,5 mm, besonders bevorzugt 0,2 mm bis 0,4 mm beträgt.

4. Verbundscheibe (100) nach einem der Ansprüche 1 bis 3, wobei die Funktionsschicht (3.2) eine konstante Schichtdicke aufweist und die Schichtdicke (b) der Funktionsschicht (3.2) von 0,01 mm bis 0,5 mm, bevorzugt 0,05 mm bis 0,2 mm, besonders bevorzugt 0,08 mm bis 0,15 mm beträgt.

5. Verbundscheibe (100) nach einem der Ansprüche 1 bis 4, wobei die Schichtdicke (a) der dickeren Schicht (3.1) mindestens 15 %, bevorzugt mindestens 25 %, größer als die Schichtdicke (c) der dünneren Schicht (3.3) ist.

6. Verbundscheibe (100) nach einem der Ansprüche 1 bis 5, wobei das Heizelement (4) als eine elektrisch leitfähige Folie ausgebildet ist.

7. Verbundscheibe (100) nach einem der Ansprüche 1 bis 5, wobei das Heizelement (4) in der Form von Drähten ausgebildet ist.

8. Verbundscheibe (100) nach einem der Ansprüche 1 bis 7, wobei die dickere Schicht (3.1) und/oder die dünnere Schicht (3.3) Polyvinylbutyral, Ethylenvinylacetat, Polyvinylacetat und/oder Polyurethane enthält oder daraus besteht.

9. Verbundscheibe (100) nach einem der Ansprüche 1 bis 8, wobei die Funktionsschicht (3.2) einen höheren Anteil an Weichmachern aufweist als die dickere und die dünnere Schicht (3.1, 3.3).

10. Verbundscheibe (100) nach einem der Ansprüche 1 oder 4 bis 9, wobei die dickere Schicht (3.1) und/oder die dünnere Schicht (3.3) keilförmig ausgebildet sind.

11. Verbundscheibe (100) nach einem der Ansprüche 1 bis 10, wobei das Heizelement (4) sich über mindestens 80% der Fläche der Verbundscheibe (100) erstreckt.

12. Verbundscheibe (100) nach einem der Ansprüche 1 bis 11, wobei das Heizelement (4) in zwei gegenüberliegenden Randbereichen mit mindestens zwei Sammelleitern (5) elektrisch leitfähig verbunden ist.

13. Verbundscheibe (100) nach Anspruch 12, wobei die zwei Sammelleiter (5) mit einer Spannungsquelle verbunden sind, sodass zwischen den beiden Sammelleitern (5) ein Strompfad durch das Heizelement (4) für einen Heizstrom geformt ist.

14. Verfahren zur Herstellung einer Verbundscheibe (100) nach einem der Ansprüche 1 bis 13, wobei
(A) ein Schichtstapel mit der Außenscheibe (1), der akustischen Zwischenschicht (3), dem Heizelement (4) und der Innenscheibe (2) bereitgestellt wird,
(B) das Heizelement (4) innerhalb der dickeren Schicht (3.1), bevorzugt mittels Eindrückens, angeordnet wird und vollständig von der dickeren Schicht (3.1) umschlossen wird, und
(C) der Schichtstapel zur Verbundscheibe (100) laminiert wird.

15. Verwendung einer Verbundscheibe (100) nach einem der Ansprüche 1 bis 13 in Fortbewegungsmitteln für den Verkehr auf dem Lande, in der Luft oder zu Wasser, bevorzugt in Kraftfahrzeugen beispielsweise als Windschutzscheibe, Heckscheibe, Seitenscheiben und/oder Glasdach, besonders bevorzugt als Dachscheibe oder als funktionales und/oder dekoratives Einzelstück und als Einbauteil in Möbeln, Geräten und Gebäuden.

## Claims

1. Laminated pane (100) comprising:
- an outer pane (1),
- an inner pane (2),
- an acoustic intermediate layer (3) arranged between the inner pane (2) and the outer pane (1), and
- a heating element (4),
wherein the acoustic intermediate layer (3) comprises, in this order, a thicker layer (3.1), a functional layer (3.2) and a thinner layer (3.3), and the heating element (4) is arranged within the thicker layer (3.1) and completely enclosed by the thicker layer (3.1),
wherein the layer thickness (a) of the thicker layer (3.1) is at least 10% greater than the layer thickness (c) of the thinner layer (3.3),
wherein, in the case of wedge-shaped layers, the relevant layer thickness from which the layer thickness difference between the thicker layer (3.1) and the thinner layer (3.3) is calculated is related to the region which has the thinnest layer thickness with regard to the thicker layer (3.1) and to the region which has the thickest layer thickness with regard to the thinner layer (3.3).

2. Laminated pane (100) according to claim 1, wherein the acoustic intermediate layer (3) has a constant layer thickness, and the layer thickness of the acoustic intermediate layer (3) is from 0.2 mm to 2 mm, preferably 0.4 mm to 1 mm, particularly preferably 0.5 mm to 0.85 mm.

3. Laminated pane (100) according to claim 1 or 2, wherein the thicker layer (3.1) has a constant layer thickness, and the layer thickness (a) of the thicker layer (3.1) is from 0.1 mm to 1 mm, preferably 0.15 mm to 0.5 mm, particularly preferably 0.2 mm to 0.4 mm.

4. Laminated pane (100) according to any of claims 1 to 3, wherein the functional layer (3.2) has a constant layer thickness, and the layer thickness (b) of the functional layer (3.2) is from 0.01 mm to 0.5 mm, preferably 0.05 mm to 0.2 mm, particularly preferably 0.08 mm to 0.15 mm.

5. Laminated pane (100) according to any of claims 1 to 4, wherein the layer thickness (a) of the thicker layer (3.1) is at least 15%, preferably at least 25% greater than the layer thickness (c) of the thinner layer (3.3).

6. Laminated pane (100) according to any of claims 1 to 5, wherein the heating element (4) is designed as an electrically conductive foil.

7. Laminated pane (100) according to any of claims 1 to 5, wherein the heating element (4) is designed in the form of wires.

8. Laminated pane (100) according to any of claims 1 to 7, wherein the thicker layer (3.1) and/or the thinner layer (3.3) contains or consists of polyvinyl butyral, ethylene vinyl acetate, polyvinyl acetate and/or polyurethanes.

9. Laminated pane (100) according to any of claims 1 to 8, wherein the functional layer (3.2) has a higher proportion of plasticizers than the thicker and the thinner layer (3.1, 3.3).

10. Laminated pane (100) according to any of claims 1 or 4 to 9, wherein the thicker layer (3.1) and/or the thinner layer (3.3) are wedge-shaped.

11. Laminated pane (100) according to any of claims 1 to 10, wherein the heating element (4) extends over at least 80% of the surface of the laminated pane (100).

12. Laminated pane (100) according to any of claims 1 to 11, wherein the heating element (4) is electrically conductively connected to at least two busbars (5) in two opposite edge regions.

13. Laminated pane (100) according to claim 12, wherein the two bus bars (5) are connected to a voltage source such that a current path through the heating element (4) for a heating current is formed between the two bus bars (5).

14. Method for producing a laminated pane (100) according to any of claims 1 to 13, wherein
(A) a layer stack comprising the outer pane (1), the acoustic intermediate layer (3), the heating element (4), and the inner pane (2) is provided,
(B) the heating element (4) is arranged within the thicker layer (3.1), preferably by means of pressing, and is completely enclosed by the thicker layer (3.1), and
(C) the layer stack is laminated to form the laminated pane (100).

15. Use of a laminated pane (100) according to any of claims 1 to 13 in means of transportation for traffic on land, in the air, or in water, preferably in motor vehicles, for example as a windshield, rear window, side windows, and/or glass roof, particularly preferably as a roof pane or as a functional and/or decorative individual piece and as a built-in part in furniture, devices, and buildings.

## Revendications

1. Vitrage feuilleté (100), comprenant :
- une vitre extérieure (1),
- une vitre intérieure (2),
- une couche intermédiaire acoustique (3) disposée entre la vitre intérieure (2) et la vitre extérieure (1) et
- un élément chauffant (4),
dans lequel la couche intermédiaire acoustique (3) comprend, dans cet ordre, une couche plus épaisse (3.1), une couche fonctionnelle (3.2) et une couche plus mince (3.3), et l'élément chauffant (4) est disposé à l'intérieur de la couche plus épaisse (3.1) et est entièrement entouré de la couche plus épaisse (3.1),
dans lequel l'épaisseur de couche (a) de la couche plus épaisse (3.1) est supérieure d'au moins 10 % à l'épaisseur de couche (c) de la couche plus mince (3.3),
dans lequel, dans le cas de couches cunéiformes, l'épaisseur de couche respective à partir de laquelle est calculée la différence d'épaisseurs de couche entre la couche plus épaisse (3.1) et la couche plus mince (3.3) est rapportée à la zone comportant l'épaisseur de couche la plus mince en ce qui concerne la couche plus épaisse (3.1) et est rapportée à la zone comportant l'épaisseur de couche la plus épaisse en ce qui concerne la couche plus mince (3.3).

2. Vitrage feuilleté (100) selon la revendication 1, dans lequel la couche intermédiaire acoustique (3) présente une épaisseur de couche constante et l'épaisseur de couche de la couche intermédiaire acoustique (3) va de 0,2 mm à 2 mm, de préférence de 0,4 mm à 1 mm, de manière particulièrement préférée de 0,5 mm à 0,85 mm.

3. Vitrage feuilleté (100) selon la revendication 1 ou 2, dans lequel la couche plus épaisse (3.1) présente une épaisseur de couche constante et l'épaisseur de couche (a) de la couche plus épaisse (3.1) va de 0,1 mm à 1 mm, de préférence de 0,15 mm à 0,5 mm, de manière particulièrement préférée de 0,2 mm à 0,4 mm.

4. Vitrage feuilleté (100) selon l'une des revendications 1 à 3, dans lequel la couche fonctionnelle (3.2) présente une épaisseur de couche constante et l'épaisseur de couche (b) de la couche fonctionnelle (3.2) va de 0,01 mm à 0,5 mm, de préférence de 0,05 mm à 0,2 mm, de manière particulièrement préférée de 0,08 mm à 0,15 mm.

5. Vitrage feuilleté (100) selon l'une des revendications 1 à 4, dans lequel l'épaisseur de couche (a) de la couche plus épaisse (3.1) est supérieure d'au moins 15 %, de préférence d'au moins 25 %, à l'épaisseur de couche (c) de la couche plus mince (3.3).

6. Vitrage feuilleté (100) selon l'une des revendications 1 à 5, dans lequel l'élément chauffant (4) est réalisé en tant que film électriquement conducteur.

7. Vitrage feuilleté (100) selon l'une des revendications 1 à 5, dans lequel l'élément chauffant (4) est réalisé sous la forme de fils.

8. Vitrage feuilleté (100) selon l'une des revendications 1 à 7, dans lequel la couche plus épaisse (3.1) et/ou la couche plus mince (3.3) contiennent du polyvinylbutyral, de l'éthylène-acétate de vinyle, du polyacétate de vinyle et/ou des polyuréthanes ou sont constituées de ceux-ci.

9. Vitrage feuilleté (100) selon l'une des revendications 1 à 8, dans lequel la couche fonctionnelle (3.2) présente une proportion de plastifiants supérieure à celles de la couche plus épaisse et de la couche plus mince (3.1, 3.3).

10. Vitrage feuilleté (100) selon l'une des revendications 1 ou 4 à 9, dans lequel la couche plus épaisse (3.1) et/ou la couche plus mince (3.3) sont cunéiformes.

11. Vitrage feuilleté (100) selon l'une des revendications 1 à 10, dans lequel l'élément chauffant (4) s'étend sur au moins 80 % de la surface du vitrage feuilleté (100).

12. Vitrage feuilleté (100) selon l'une des revendications 1 à 11, dans lequel l'élément chauffant (4) est connecté de manière électriquement conductrice à au moins deux bus de raccordement (5) dans deux zones de bord opposées.

13. Vitrage feuilleté (100) selon la revendication 12, dans lequel les deux bus de raccordement (5) sont connectés à une source de tension, de sorte qu'un trajet de courant est formé à travers l'élément chauffant (4) entre les deux bus de raccordement (5) pour un courant de chauffage.

14. Procédé pour la fabrication d'un vitrage feuilleté (100) selon l'une des revendications 1 à 13, dans lequel
(A) un empilement de couches comportant la vitre extérieure (1), la couche intermédiaire acoustique (3), l'élément chauffant (4) et la vitre intérieure (2) est fourni,
(B) l'élément chauffant (4) est disposé à l'intérieur de la couche plus épaisse (3.1), de préférence par enfoncement, et est entièrement entouré de la couche plus épaisse (3.1), et
(C) l'empilement de couches est stratifié pour former le vitrage feuilleté (100).

15. Utilisation d'un vitrage feuilleté (100) selon l'une des revendications 1 à 13 dans des moyens de locomotion pour la circulation terrestre, aérienne ou maritime, de préférence dans des véhicules automobiles, par exemple en tant que pare-brise, lunette arrière, vitre latérale et/ou toit en verre, de manière particulièrement préférée en tant que vitre de toit ou en tant que pièce unique fonctionnelle et/ou décorative et en tant que pièce à insérer dans des meubles, appareils et bâtiments.
